# EUROPÄISCHE PATENTSCHRIFT

(11) **EP 0 717 131 B1**
(45) Veröffentlichungstag und Bekanntmachung des Hinweises auf die Patenterteilung: **04.11.1998**
(21) Anmeldenummer: 95119048.7
(22) Anmeldetag: 04.12.1995
(51) Int. Cl.: D01F 2/06, C08J 5/18, C08B 1/08, C08B 9/00

(54) **Verfahren zum Recycling von gefärbten, cellulosischen Abfallprodukten**
Recycling process of dyed cellulosic waste products
Procédé de recyclage de produits cellulosiques teints

(30) Priorität: 13.12.1994 DE 4444245
(43) Veröffentlichungstag der Anmeldung: 19.06.1996
(73) Patentinhaber: DyStar Textilfarben GmbH & Co. Deutschland KG, 60318 Frankfurt am Main (DE)
(72) Erfinder: von der Eltz, Andreas, Dr., D-60431 Frankfurt am Main (DE)

(56) Entgegenhaltungen:
- DD-A- 137 367
- DD-A- 229 141
- DE-A- 2 321 829
- DE-A- 2 906 138
- DE-B- 1 045 387
- US-A- 2 184 586

## Beschreibung

Aus zahlreichen Lehrbüchern (z.B. G. Ebner, D. Scholz, Textilfärberei und Farbstoffe, Springer Verlag 1989, Seite 50) ist bekannt, wie Cellulosen, vornehmlich in Form von Zellstoff, im Xanthogenat-Verfahren zu Viskosen verarbeitet werden. Außer dem Xanthogenat-Verfahren existieren weitere Verfahren zum Lösen und Verspinnen von Zellstoffen und Linters, wie z.B. das Nitratverfahren, das Acetatverfahren, das Kupferverfahren (Kupferreyon, Bembergseide) und das N-Methyl-Morpholin-N-Oxid-Verfahren (®Tencel), wobei Cellulose auch mit LiOH/Dimethylformamid gelöst werden kann.

So kann man allgemein gemäß der DE-A-23 21 829 Holzfaserabfallprodukte, wie Zeitungspapier und Baumwolle, zur Viskose verarbeiten, indem man dieses Material in einer Kugelmühle zerkleinert und es einer zerkleinerten Alkalicellulose zusetzt in einer Menge, die das Gewicht des Cellulosegehalts der Alkalicellulose nicht übersteigt, wobei die erhältliche Viskose in üblicher Weise weiterverarbeitet wird. Weiterhin wird in der DD-A-137 367 ein Verfahren zur Herstellung von Regeneratseide oder -faser auf Cellulosebasis beschrieben, wobei die bei der Herstellung in den textilen Abteilungen anfallenden trockenen Abfälle eingesetzt werden. Nach diesem Verfahren wird einer in bekannter Weise aus hochwertigem Zellstoff hergestellten Viskose eine aus trockenen Abfällen der textilen Abteilungen gewonnene Viskose mit einer Viskosität von kleiner als 31" KF kontinuierlich in einem Verhältnis von 1:25 beigemischt.

Der bei den genannten Verfahren verwendete Zellstoff stammt überwiegend aus Holzprodukten und hat einen niedrigeren Polymerisationsgrad als Baumwolle.

Linters sind kurzfaserige Baumwollfasern und sind für die Viskoseherstellung ein teurer Rohstoff, der meist nur im Kupfer-Verfahren verwendet wird, das für die Erzeugung von Hohlmembranen für die Dialyse verwendet wird. Die genannten Einsatzprodukte entstammen direkt der Zellstoffindustrie, d.h. Verfahren zur Herstellung von Viskosen benötigen nach gegenwärtigem Stand der Technik immer neuwertige Rohstoffe.

Die Entsorgung von zumeist gefärbten Alttextilien, vornehmlich solchen aus Baumwolle, stellt in den Industrienationen heutzutage ein zunehmendes Problem dar. Geeignete Kompostierungsbedingungen für derartige Alttextilien sind noch nicht gefunden worden.

Eine Wiederverwendung von Alttextilien wird in sogenannten "Second hand shops" und in Form von Reißwolle bereits durchgeführt. Zu höherwertigen Artikeln werden die farbigen Alttextilien bisher nicht verarbeitet.

Die Aufgabe der vorliegenden Erfindung bestand darin, einen Weg zur Lösung des genannten Entsorgungsproblems zu finden.

Es wurde gefunden, daß man überraschenderweise farbige Alttextilien aus Cellulosefasern nach vorheriger Zerkleinerung wieder als Xanthogenat in Natronlauge lösen und daraus gefärbte Viskosefasern spinnen oder zu gefärbten Folien verarbeiten kann, wenn vorher eine farbliche Trennung der Alttextilien stattfand.

Gegenstand der vorliegenden Erfindung ist ein Verfahren zur Herstellung von Viskose, dadurch gekennzeichnet, daß man ein mit Reaktivfarbstoffen gefärbtes Cellulosematerial, gegebenenfalls im Gemisch mit Zellstoff, in Alkalilauge suspendiert (Alkalicellulose), gegebenenfalls eine reduzierende Schwefelverbindung bei einer Temperatur von 20 bis 80°C auf die Alkalicellulose einwirken läßt, dann die Alkalicellulose für mindestens 30 Minuten bei Temperaturen von 30 bis 80°C reifen läßt, die Alkalicellulose durch Umsetzung mit Schwefelkohlenstoff zum Xanthogenat bei einer Temperatur von 10 bis 30°C in Lösung bringt und die xanthogenierte Alkalicellulose zu Fasern verspinnt oder zu Folien verarbeitet.

Beim Verspinnen wird die Spinnlösung zweckmäßigerweise durch feine Düsen in ein Fällbad gedrückt. In diesem Fällbad wird das Xanthogenat zerstört und die rückgebildete Viskose im Sauren gefällt. Das Fällbad enthält üblicherweise Schwefelsäure und Zinksulfat. Auch andere übliche Additive können enthalten sein. Zum Herstellen von Folien läßt man die xanthogenierte Alkalicellulose nach üblichen Methoden, beispielsweise aus trichterartigen Behältern durch feine, verstellbare, in das Fällbad tauchende Schlitze ausfließen, wobei ähnlich wie bei Viskosefasern eine Härtung der Folien stattfindet (Ullmann (4) 11, 678 ff., 436 f., A5, 401-404).

Als Cellulosematerial, das für das erfindungsgemäße Verfahren eingesetzt wird, kommen Alttextilien aus Cellulosefasern, insbesondere aus Baumwolle, gebrauchtes Viskosematerial und sonstige Regeneratcellulosen sowie durch Aminierung modifizierte Viskose- und Baumwollmaterialien, wie sie beispielsweise in EP-A-0 546 476, DE-A-2 930 738, EP-A-0 276 597, der japanischen Patentanmeldungsveröffentlichung Hei-5-5279, CA-A-1 267 490 und CA-A-2 084 585 beschrieben sind, in Betracht, die mit Reaktivfarbstoffen, insbesondere solchen mit Vinylsulfon-Anker, gefärbt worden sind.

Solche Farbstoffe sind zahlreich in der Literatur beschrieben. Die Farbstoffe können den verschiedensten Farbstoffklassen angehören, wie beispielsweise der Klasse der Monoazo-, Disazo-, Polyazo-, Metallkomplex-Azo-, wie 1:1-Kupfer-, 1:2-Chrom- und 1:2-Kobaltkomplex-Monoazo- und -Disazo-Farbstoffe, weiterhin der Reihe der Anthrachinonfarbstoffe, Kupfer-, Nickel- und Kobaltphthalocyaninfarbstoffe, Kupferformazanfarbstoffe, Azomethin-, Nitroaryl-, Dioxazin-, Triphendioxazin-, Phenazin- und Stilbenfarbstoffe.

Faserreaktive Reste sind beispielsweise: Vinylsulfonyl, β-Chlorethylsulfonyl, β-Sulfatoethylsulfonyl, β-Acetoxy-ethylsulfonyl, β-Phosphatoethylsulfonyl, β-Thiosulfatoethylsulfonyl, N-Methyl-N-(β-sulfatoethyl-sulfonyl)-amino, Acryloyl, -CO-CCl = CH₂, -CO-CH = CH-Cl, -CO-CCl = CHCl, -CO-CCl = CH-CH₃, -CO-CBr = CH₂, -CO-CH = CH-Br, -CO-CBr = CH-CH₃, -CO-CCl = CH-COOH, -CO-CH = CCl-COOH, -CO-CBr = CH-COOH, -CO-CH = CBr-COOH, -CO-CCl = CCl-COOH, -CO-CBr = CBr-COOH, β-Chlor- oder β-Brompropionyl, 3-Phenylsulfonylpropionyl, 3-Methylsulfonylpropionyl, 3-Chlor-3-phenylsulfonylpropionyl, 2,3-Dichlorpropionyl, 2,3-Dibrompropionyl, 2-Fluor-2-chlor-3,3-difluorcyclobutan-2-carbonyl,2,2,3,3-Tetrafluorcyclobutan-1-carbonyl oder -1-sulfonyl, β-(2,2,3,3-Tetrafluorcyclobutyl-1)acryloyl, α- oder β-Methylsulfonylacryloyl, Propiolyl, Chloracetyl, Bromacetyl, 4-(β-Chlorethylsulfonyl)-butyril, 4-Vinylsulfonyl-butyryl, 5-(β-Chlorethyl-sulfonyl)valeryl, 5-Vinylsulfonyl-valeryl, 6-(β-Chlorethyl-sulfonyl)-caproyl, 6-Vinylsulfonyl-caproyl, 4-Fluor-3-nitro-benzoyl, 4-Fluor-3-nitrophenylsulfonyl, 4-Fluor-3-methylsulfonylbenzoyl, 4-Fluor-3-cyano-benzoyl, 2-Fluor-5-methylsulfonyl-benzoyl, 2,4-Dichlortriazinyl-6, 2,4-Dichlor-pyrimidinyl-6, 2,4,5-Trichlorpyrimidinyl-6, 2,4-Dichlor-5-nitro- oder 5-methyl- oder -5-carboxymethyl oder -5-carboxy oder -5-cyano oder -5-vinyl oder -5-sulfo oder -5-mono-, di- oder trichlormethyl oder -5-methylsulfonyl-pyrimidinyl-6, 2,5-Dichlor-4-methylsulfonyl-pyrimidinyl-6, 2-Fluor-4-pyrimidinyl, 2,6-Difluor-4-pyrimidinyl, 2,6-Difluor-5-chlor-4-pyrimidinyl, 2-Fluor-5,6-dichlor-4-pyrimidinyl, 2,6-Difluor-5-methyl-4-pyrimidinyl, 2,5-Difluor6-methyl-4-pyrimidinyl, 2-Fluor-5-methyl-6-chlor-4-pyrimidinyl, 2-Fluor-5-nitro-6-chlor-4-pyrimidinyl, 5-Brom-2-fluor-4-pyrimidinyl, 2-Fluor-5-cyan-4-pyrimidinyl, 2-Fluor-5-methyl-4-pyrimidinyl, 2,5,6-Trifluor-4-pyrimidinyl, 5-Chlor-6-chlormethyl-2-fluor-4-pyrimidinyl, 2,6-Difluor-5-brom-4-pyrimidinyl, 2-Fluor-5-brom-6-chlor-methyl-4-pyrimidinyl, 2,6-Difluor-5-chlormethyl-4-pyrimidinyl, 2,6-Difluor-5-nitro-4-pyrimidinyl, 2-Fluor-6-methyl-4-pyrimidinyl, 2-Fluor-5-chlor-6-methyl-4-pyrimidinyl, 2-Fluor-5-chlor-4-pyrimidinyl, 2-Fluor-6-chlor-4-pyrimidinyl, 6-Trifluormethyl-5-chlor-2-fluor-4-pyrimidinyl, 6-Trifluormethyl-2-fluor-4-pyrimidinyl, 2-Fluor-5-nitro-4-pyrimidinyl, 2-Fluor-5-trifluormethyl-4-pyrimidinyl, 2-Fluor-5-phenyl oder -5-methylsulfonyl-4-pyrimidinyl, 2-Fluor-5-carbonamido-4-pyrimidinyl, 2-Fluor-5-carbomethoxy-4-pyrimidinyl, 2-Fluor-5-brom-6-trifluormethyl-4-pyrimidinyl, 2-Fluor-6-carbonamido-4-pyrimidinyl, 2-Fluor-6-carbomethoxy-4-pyrimidinyl, 2-Fluor-6-phenyl-4-pyrimidinyl, 2-Fluor-6-cyan-4-pyrimidinyl, 2,6-Difluor-5-methylsulfonyl-4-pyrimidinyl, 2-Fluor-5-sulfonamido-4-pyrimidinyl, 2-Fluor-5-chlor-6-carbomethoxy-4-pyrimidinyl, 2,6-Difluor-5-trifluormethyl-4-pyrimidinyl, 2,4-Bis-(methylsulfonyl)-pyrimidinyl-4, 2,5-Bis-(methyl-sulfonyl)-5-chlor-pyrimidinyl-4, 2-Methylsulfonylpyrimidinyl-4, 2-Phenylsulfonyl-pyrimidinyl-4, 2-Methylsulfonyl-5-chlor-6-methyl-pyrimidinyl-4, 2-Methylsulfonyl-5-brom-6-methylpyrimidinyl-4, 2-Methylsulfonyl-5-chlor-6-ethyl-pyrimidinyl-4, 2-Methylsulfonyl-5-chlor-methyl-pyrimidinyl-4, 2-Methylsulfonyl-5-nitro-6-methyl-pyrimidinyl-4, 2,5,6-Tris-methylsulfonylpyrimidinyl-4, 2-Methylsulfonyl-5,6-dimethyl-pyrimidinyl-4, 2-Ethylsulfonyl-5-chlor-6-methylpyrimidinyl-4, 2-Methylsulfonyl-6-chlorpyrimidinyl-4, 2,6-Bis(methylsulfonyl)-5-chlor-pyrimidinyl-4, 2-Methylsulfonyl-6-carboxy-pyrimidinyl-4, 2-Methylsulfonyl-5-sulfopyrimidinyl-4, 2-Methylsulfonyl-6-carbomethoxypyrimidinyl-4, 2-Methylsulfonyl-5-carboxy-pyrimidinyl-4, 2-Methylsulfonyl-5-cyan-6-methoxy-pyrimidinyl-4, 2-Methylsulfonyl-5-chlor-pyrimidinyl-4, 2-Sulfoethylsulfonyl-6-methylpyrimidinyl-4, 2-Methylsulfonyl-5-brom-pyrimidinyl-4, 2-Phenylsulfonyl-5-chlor-pyrimidinyl-4, 2-Carboxymethylsulfonyl-5-chlor-6-methyl-pyrimidinyl-4, 2,4-Dichlorpyrimidin-6-carbonyl-6-carbonyl oder -6-sulfonyl, 2,4-Dichlorpyrimidin-5-carbonyl oder -5-sulfonyl, 2-Chlor-4-methylpyrimidin-5-carbonyl, 2-Methyl-4-chlorpyrimidin-5-carbonyl, 2-Methylthio-4-fluorpyrimidin-5-carbonyl, 6-Methyl-2,4-dichlorpyrimidin-5-carbonyl, 2,4,6-Trichlorpyrimidin-5-carbonyl, 2,4-Dichlorpyrimidin-5-sulfonyl, 2,4-Dichlor-6-methyl-pyrimidin-5-carbonyl oder -5-sulfonyl, 2-Methylsulfonyl-6-chlorpyrimidin-4 und -5-carbonyl, 2,6-Bis-(methylsulfonyl)-pyrimidin-4 oder -5-carbonyl, 2-Ethylsulfonyl-6-chlorpyrimidin-5-carbonyl, 2,4-Bis-(methylsulfonyl)-pyrimidin-5-sulfonyl, 2-Methylsulfonyl-4-chlor-6-methylpyrimidin-5-sulfonyl- oder -5-carbonyl, 2-Chlorchinoxalin-3-carbonyl, 2- oder 3-Monochlorchinoxalin-6-carbonyl, 2- oder 3-Monochlorchinoxalin-6-sulfonyl, 2,3-Dichlorchinoxalin-5- oder -6-carbonyl, 2,3-Dichlorchinoxalin-5- oder -6-sulfonyl, 1,4-Dichlorphthalazin-6-sulfonyl- oder -6-carbonyl, 2,4-Dichlorchinazolin-7- oder -6-sulfonyl- oder -carbonyl, 2,4,6-Trichlorchinazolin-7 oder 8-sulfonyl, 2- oder 3- oder 4-(4',5'-Dichlorpyridazon-6'-yl-1')-phenylsulfonyl oder -carbonyl, β-(4',5'-Dichlorpyridazinon-6'-yl-1')-propionyl, 3,6-Dichlorpyridazin-4-carbonyl oder -4-sulfonyl, 2-Chlorbenzthiazol-5- oder -6-carbonyl oder -5- oder -6-sulfonyl, 2-Arylsulfonyl- oder 2-Alkylsulfonylbenzthiazol-5- oder -6-carbonyl oder -5- oder -6-sulfonyl, wie 2-Methylsulfonyl- oder 2-Ethylsulfonylbenzthiazol-5- oder -6-sulfonyl oder -carbonyl, 2-Phenylsulfonyl-benzthiazol-5- oder -6-sulfonyl- oder -carbonyl und die entsprechenden im ankondensierten Benzolring Sulfogruppen enthaltenden 2-Sulfonylbenzthiazol-5- oder -6-carbonyl- oder -sulfonyl-Derivate, 2-Chlorbenzoxazol-5- oder -6-carbonyl- oder -sulfonyl, 2-Chlorbenzimidazol-5- oder -6-carbonyl oder -sulfonyl, 2-Chlor-1-methylbenzimidazol-5- oder -6-carbonyl oder -sulfonyl, 2-Chlor-4-methylthiazol-(1,3)-5-carbonyl) oder -4- oder -5-sulfonyl; ammoniumgruppenhaltige Triazinringe, wie 2-Trimethylammonium-4-phenylamino- und 4-(o, m- oder p-Sulfophenyl)-aminotriazinyl-6, 2-(1,1-Dimethylhydrazinium)-4-phenylamino- und 4-(o-, m- oder p-Sulfophenyl)-aminotriazinyl-6, 2-(2-lsopropyliden-1,1-dimethyl)hydrazinium-4-phenylamino- und 4-(o-, m- oder p-Sulfophenyl)-aminotriazinyl-6, 2-N-Aminopyrrolidinium-, 2-N-Aminopiperidinium-4-phenylamino- oder 4-(o-, m- oder p-Sulfophenyl)-aminotriazinyl-6, 4-Phenylamino- oder 4-(Sulfophenylamino)-triazinyl-6, die in 2-Stellung über eine Stickstoffbindung das 1,4-Bis-azabicyclo[2,2,2]octan oder das 1,2-Bis-aza-bicyclo-[0,3,3]-octan quartär gebunden enthalten, 2-Pyridinium-4-phenylamino- oder 4-(o-, m- oder p-Sulfophenyl)-amino-triazinyl-6 sowie entsprechende 2-Oniumtriazinyl-6-Reste, die in 4-Stellung durch Alkylamino, wie Methylamino, Ethylamino oder β-Hydroxyethylamino, oder Alkoxy, wie Methoxy oder Ethoxy, oder Aryloxy, wie Phenoxy oder Sulfophenoxy, substituiert sind.

Soll das in das erfindungsgemäße Verfahren eingesetzte Cellulosematerial durch eine reduzierende Schwefelverbindung entfärbt werden, so sind nur solche Cellulosematerialien geeignet, die mit einem Reaktivfarbstoff vom Vinylsulfon-Typ gefärbt worden sind, d.h. mit solchen, die die Vinylsulfonylgruppe selbst oder einen Rest, aus dem durch Eliminierung die Vinylsulfonyl-Gruppe entsteht, enthalten. Bei diesen Farbstoffen wird die Bindung zur Cellulose zerstört, so daß keine vergilbenden Reste auf der Faser verbleiben.

Es ist zweckmäßig, das einzusetzende Cellulosematerial vor dem Suspendieren in Natronlauge mechanisch zu zerkleinern. Die mechanische Zerkleinerung kann mit beliebigen Methoden durchgeführt werden, beispielsweise durch Reiß- und/oder Mahlvorgänge, Zerrupfen oder Schneiden.

Die Zugabe von Zellstoff zum einzusetzenden Cellulosematerial ist zweckmäßig, wenn ein möglichst geringer DP-Grad (durchschnittlicher Polymerisationsgrad) erreicht werden soll.

Die Erzeugung der Alkalicellulose erfolgt vorzugsweise mit 15 bis 20 gew.-%iger Alkalilauge, beispielsweise Natronlauge oder Kalilauge, vorzugsweise Natronlauge, bei einer Temperatur von 20 bis 40°C. Zweckmäßigerweise werden pro 100 Gew.-Teile Fasern 1000 bis 3000 Gew.-% Teile Alkalilauge eingesetzt.

Wenn eine vorherige farbliche Trennung des einzusetzenden Cellulosematerials vorgenommen wurde, hat die entstandene Alkalicellulose den entsprechenden Farbton. Bevorzugt ist daher der Einsatz von einfarbigen und nach Farben getrennten Alttextilien.

Im Falle, daß eine Entfärbung des Cellulosematerials gewünscht ist, wird der Alkalicellulose ein Alkalihydrogensulfit oder Alkalidithionit, vorzugsweise Natriumhydrogensulfit oder Natriumdithionit, in einer Menge von 5 bis 30 Gew.-%, bevorzugt 10 bis 20 Gew.-%, bezogen auf das eingesetzte Cellulosematerial, zugegeben und auf eine Temperatur von 30 bis 100°C, vorzugsweise 40 bis 80°C, erhitzt, bis sich die Alkalicellulose-Suspension entfärbt. Anschließend wird, sofern erforderlich, filtriert und das krümelige Material zum "Reifen" für 1/2 bis 24 Stunden, vorzugsweise 1 bis 5 Stunden, bei einer Temperatur von 30 bis 80°C, vorzugsweise 40 bis 60°C, langsam bewegt.

Die Reifezeit im Alkalibad dient der Einstellung des Polymerisationsgrades der Celluloseketten und muß dem jeweils eingesetzten Cellulosematerial und dem gewünschten Polymerisationsgrad in der Viskosefaser angepaßt werden. Es ist auch möglich, das Reifen in Gegenwart von Cellulose abbauenden Enzymen (Cellulasen) durchzuführen, die dem Fachmann allseits bekannt und auch im Handel erhältlich sind, um die Einstellung des gewünschten Polymerisationsgrades zu beschleunigen. Auch ein Abbau der Cellulosen mit verdünnter H₂SO₄ ist möglich, was aber bei der nachträglichen Neutralisation zu großen Na₂SO₄-Mengen führt.

Die farbige oder gegebenenfalls mit einer reduzierenden Schwefelverbindung entfärbte Alkalicellulose wird mit 1,5 bis 4 Gew.-% Schwefelkohlenstoff, bezogen auf das eingesetzte Cellulosematerial, versetzt, so daß die Temperatur 30°C nicht übersteigt. Das daraus entstandene Xanthogenat wird in verdünnte Alkalilauge eingetragen und zu einer homogenen Masse verrührt, die beispielsweise nach einem üblichen Viskosespinnverfahren in ein schwefelsaures, Natrium- und Zinksulfat-haltiges Fällbad zu Viskosefasern versponnen, in sauren Bädern verstreckt, geschnitten, gewaschen, präpariert und getrocknet wird. In dem besagten Fällbad wird beim Verspinnen der Lösung ein farbiger oder gegebenenfalls farbloser Faden ausgefällt, der nach Verstreckung gewebt oder gewirkt werden kann. Auch Vliesstoffe können erzeugt werden.

Es ist auch möglich, die so erhaltene Viskose statt zu Fasern zu verspinnen, zu Folien, Form- oder Gußteilen zu verarbeiten.

Es war überraschend, daß trotz der chemischen Bindung des Reaktivfarbstoffes zur Faser das Cellulosematerial in Lösung gebracht werden kann und daß der Farbstoff im Verlauf des erfindungsgemäßen Verfahrens weder zerstört noch ausgewaschen wird. Überraschenderweise bleiben auch die ursprünglich vorhandenen Echtheiten, wie Lichtechtheit, Schweißechtheit, Chlorechtheit, Wasserechtheit, Reibeechtheit und Waschechtheit, bei dem gefärbten Viskosematerial erhalten. Auch konnte nicht erwartet werden, daß im Falle der reduktiven Zerstörung des Farbstoffes ein reinweißes, nicht vergilbtes Viskosematerial erhalten wird.

In den nachfolgenden Beispielen bedeuten "Teile" Gewichtsteile.

### Beispiele

1) 100 Teile Baumwolle-Alttextilien, die mit dem schwarzen Farbstoff der Formel 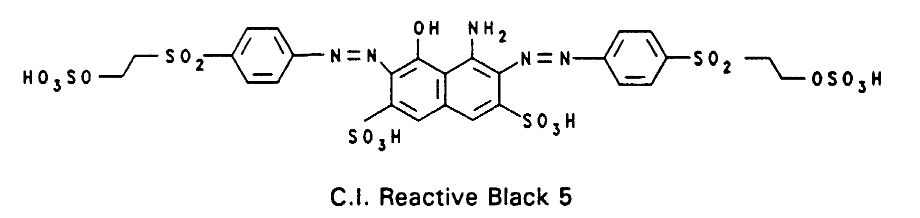 gefärbt sind, werden in Reiß- und Schneidwerken zu einem pulvrigen Material zerkleinert. Das Pulver wird mit 20 Teilen NaOH (33 gew.-%ig) und 1000 Teilen Wasser versetzt. Anschließend gibt man 8 Teile Natriumhydrogensulfit hinzu und kocht die Mischung auf, wobei sich das Cellulosematerial entfärbt. Hiernach wird die Lösung abgesaugt.
   60 Teile dieser zerkleinerten und entfärbten Baumwollfasern werden mit 1000 Teilen einer 18 gew.-%igen Natronlauge versetzt und 45 Minuten vermengt. Nach dieser Zeit wird die überschüssige Lauge über eine Glasfritte abgesaugt. Die so erzeugte Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die gelbliche Masse in 450 Teile einer 4 gew.-%igen Natronlauge ein und verrührt das Xanthogenat zu einer homogenen, viskosen Masse. Nach dem Entgasen wird die Spinnmasse nach betriebsüblichen Viskosespinnverfahren in ein schwefelsaures, Natrium- und Zinksulfat-haltiges Bad zu farblosen Fasern versponnen, in sauren Bädern verstreckt, geschnitten, gewaschen, präpariert und getrocknet.
2) 60 Teile zerkleinerte und mit dem schwarzen Reaktivfarbstoff aus Beispiel 1 gefärbte Baumwollfasern werden mit 1000 Teilen einer 18 gew.-%igen Natronlauge und 4,8 Teilen Natriumhydrogensulfit versetzt, 15 Minuten auf 80°C erhitzt und anschließend 30 Minuten bei 25°C nachgerührt. Nach dieser Zeit wird die überschüssige Lauge über eine Glasfritte abgesaugt. Die so erzeugte Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die gelbliche Masse in 450 Teile einer 4 gew.-%igen Natronlauge ein und verrührt das Xanthogenat zu einer homogenen, viskosen Masse.
   Nach dem Entgasen wird die Spinnmasse nach betriebsüblichen Viskosespinnverfahren in ein schwefelsaures, Natrium- und Zinksulfat-haltiges Bad zu farblosen Fasern versponnen, in sauren Bädern verstreckt, geschnitten, gewaschen, präpariert und getrocknet.
3) 60 Teile zerkleinerte und mit dem Farbstoff der Formel 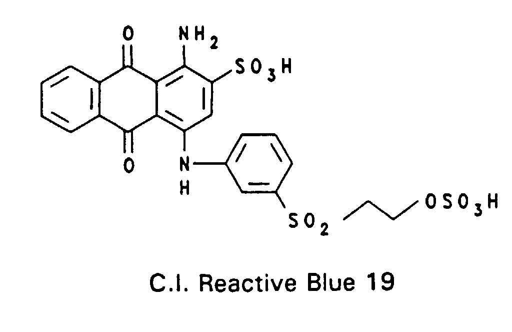 gefärbte Baumwollfasern werden mit 1000 Teilen einer 18 gew.-%igen Natronlauge versetzt und 45 Minuten vermengt. Nach dieser Zeit wird die überschüssige Lauge über eine Glasfritte abgesaugt. Die so erzeugte blaue Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die blaue Masse in 450 Teile einer 4 gew.-%igen Natronlauge ein und verrührt das Xanthogenat zu einer homogenen, viskosen Masse.
   Nach dem Entgasen wird die Spinnmasse nach betriebsüblichen Viskosespinnverfahren in ein schwefelsaures, Natrium- und Zinksulfat-haltiges Bad zu Fasern versponnen, in sauren Bädern verstreckt, geschnitten, gewaschen, präpariert und getrocknet. Auf diese Weise erhält man eine blaue Faser, ohne erneut färben zu müssen. Die resultierenden Echtheiten entsprechen den ursprünglichen Echtheiten des Ausgangsmaterials.
4 a) 100 Teile mit C.I. Reactive Blue 19 gefärbte Baumwoll-Alttextilien, die nach der EP-A-0 601 351 aminiert wurden, werden in Reiß- und Schneidwerken zu einem pulverigen Material zerkleinert. Das Pulver wird mit 20 Teilen NaOH (33 gew.-%ig) und 1000 Teilen Wasser versetzt. Anschließend gibt man 8 Teile Natriumdithionit hinzu und kocht die Mischung auf, wobei sich das Cellulosematerial entfärbt. Hiernach wird die Lösung abgesaugt. Nach dem Entgasen wird die Spinnmasse nach betriebsüblchen Viskosespinnverfahren in ein schwefelsaures, Natrium- und Zinksulfat-haltiges Bad zu Fasern versponnen, in sauren Bädern verstreckt, geschnitten, gewaschen, präpariert und getrocknet. Die auf diese Weise erzeugten Fasern oder auch Folien können auch ohne Salz und Alkali gefärbt werden. Dazu nimmt man 60 Teile Fasern und färbt diese in einem Bad aus 600 Teilen Wasser und 1,2 Teilen Farbstoff (z.B. C.I. Reactive Yellow 37) und erhält eine 2 %ige gelbe Färbung.
4 b) 60 Teile der gemäß 4 a) zerkleinerten, gefärbten Baumwollfasern werden mit 1000 Teilen einer 18 gew.-%igen Natronlauge versetzt und 45 Minuten vermengt. Nach dieser Zeit wird die überschüssige Lauge über eine Glasfritte abgesaugt. Die so erzeugte blaue Alkalicellulose beläßt man zum Reifen 60 Minuten bei 60°C, kühlt auf 15°C ab und setzt 20 Teile Schwefelkohlenstoff so zu, daß die Temperatur 30°C nicht übersteigt. Nach 45 Minuten Reaktionszeit trägt man die blaue Masse in 450 Teile einer 4 gew.-%igen Natronlauge ein und verrührt das Xanthogenat zu einer homogenen, viskosen Masse. Nach dem Entgasen wird die Spinnmasse nach betriebsübichen Viskosespinnverfahren in ein schwefelsaures, Natrium- und Zinksulfat-haltiges Bad zu Fasern versponnen, in sauren Bädern verstreckt, geschnitten, gewaschen, präpariert und getrocknet.

### Beispiele 5 bis 20

Baumwoll-Alttextilien, die mit den in der nachfolgenden Tabelle genannten Reaktivfarbstoffen gefärbt worden sind, werden analog zu Beispiel 2 oder 3 in Lösung gebracht, xanthogeniert und zu Fasern versponnen. Die erhaltenen Echtheiten entsprechen denen des Ausgangsmaterials.

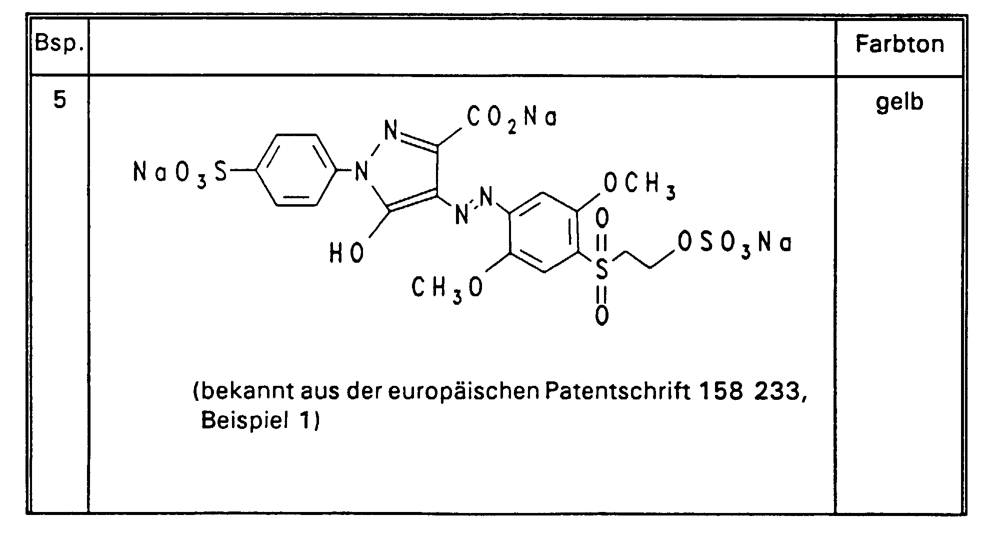

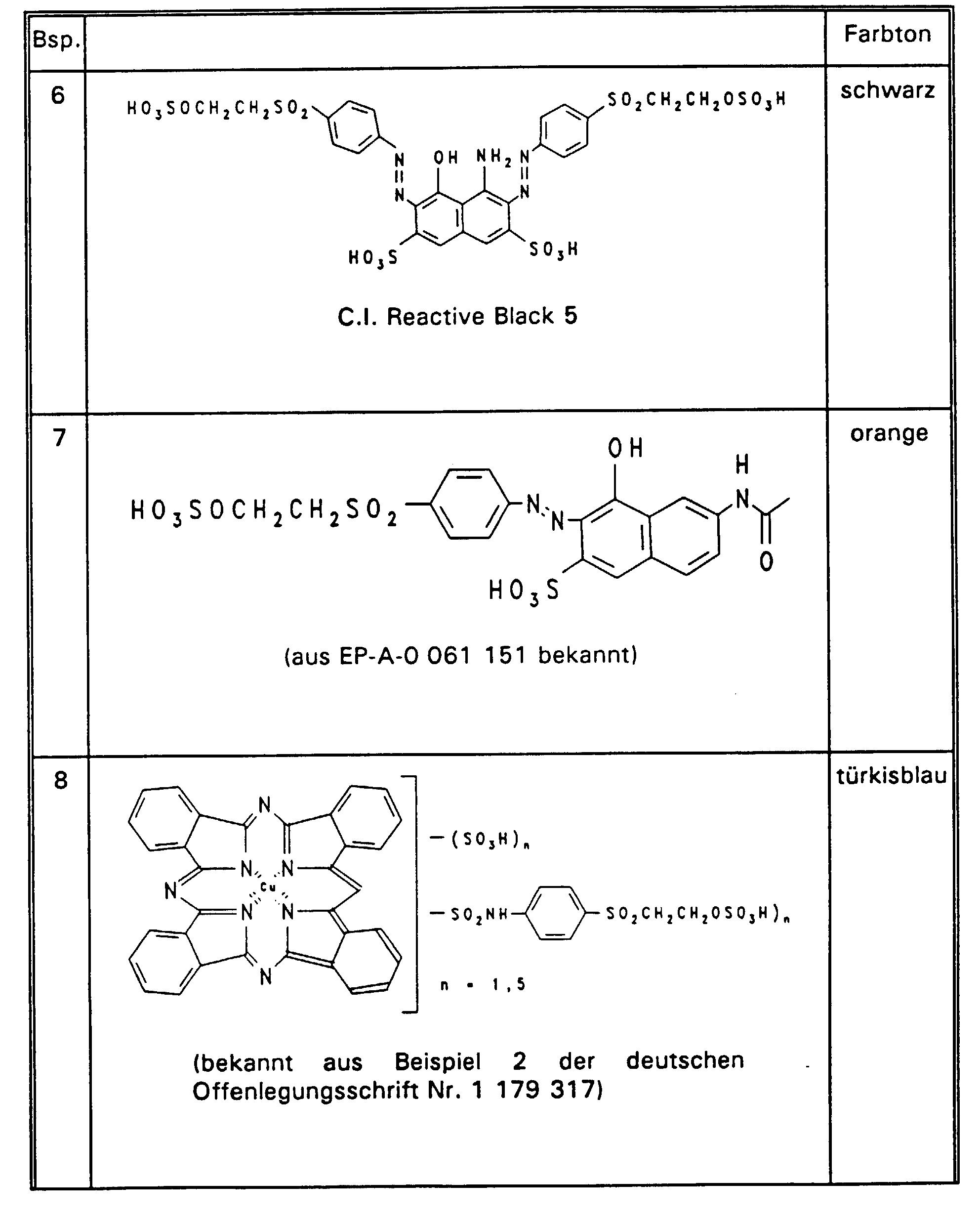

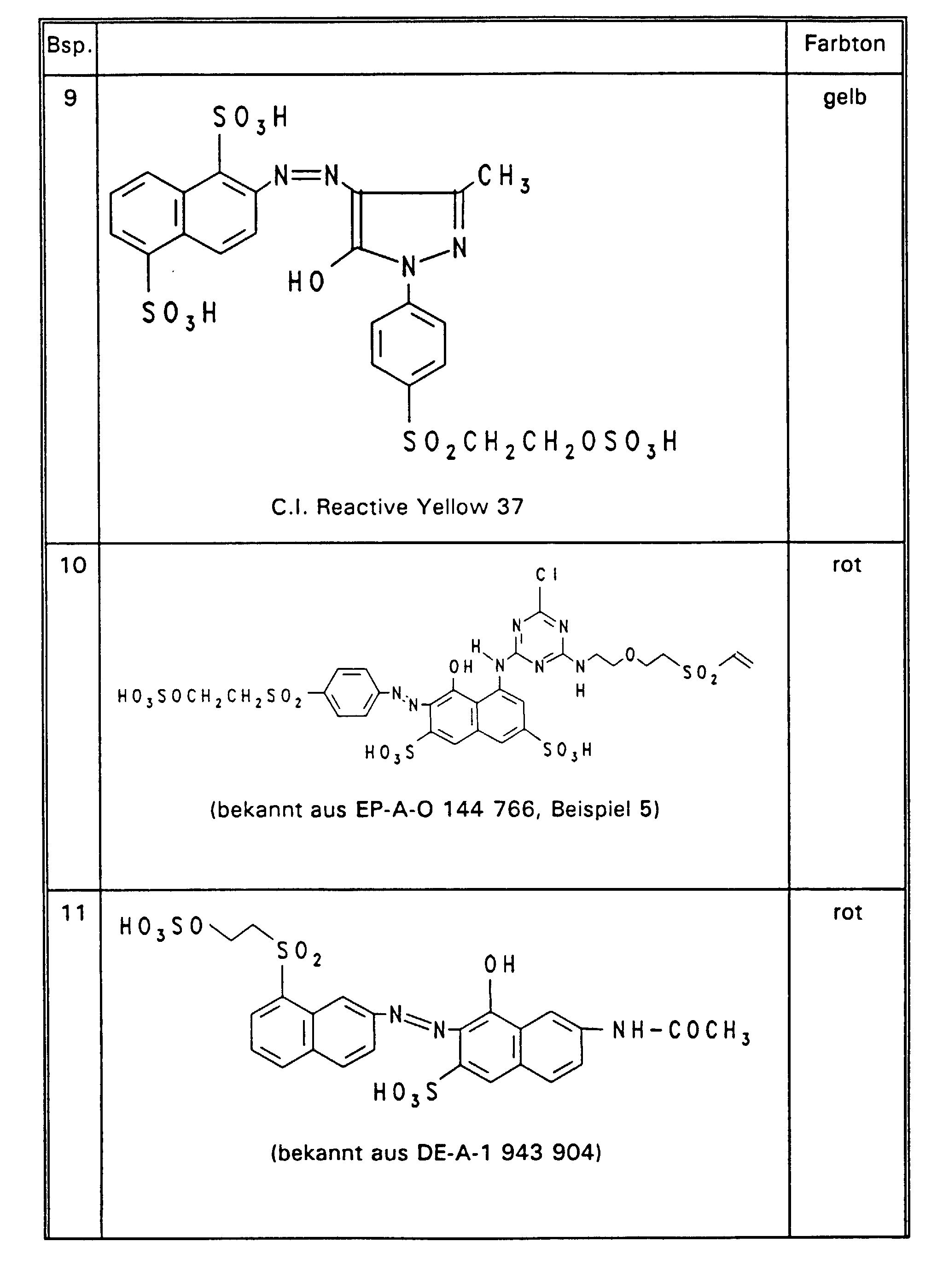

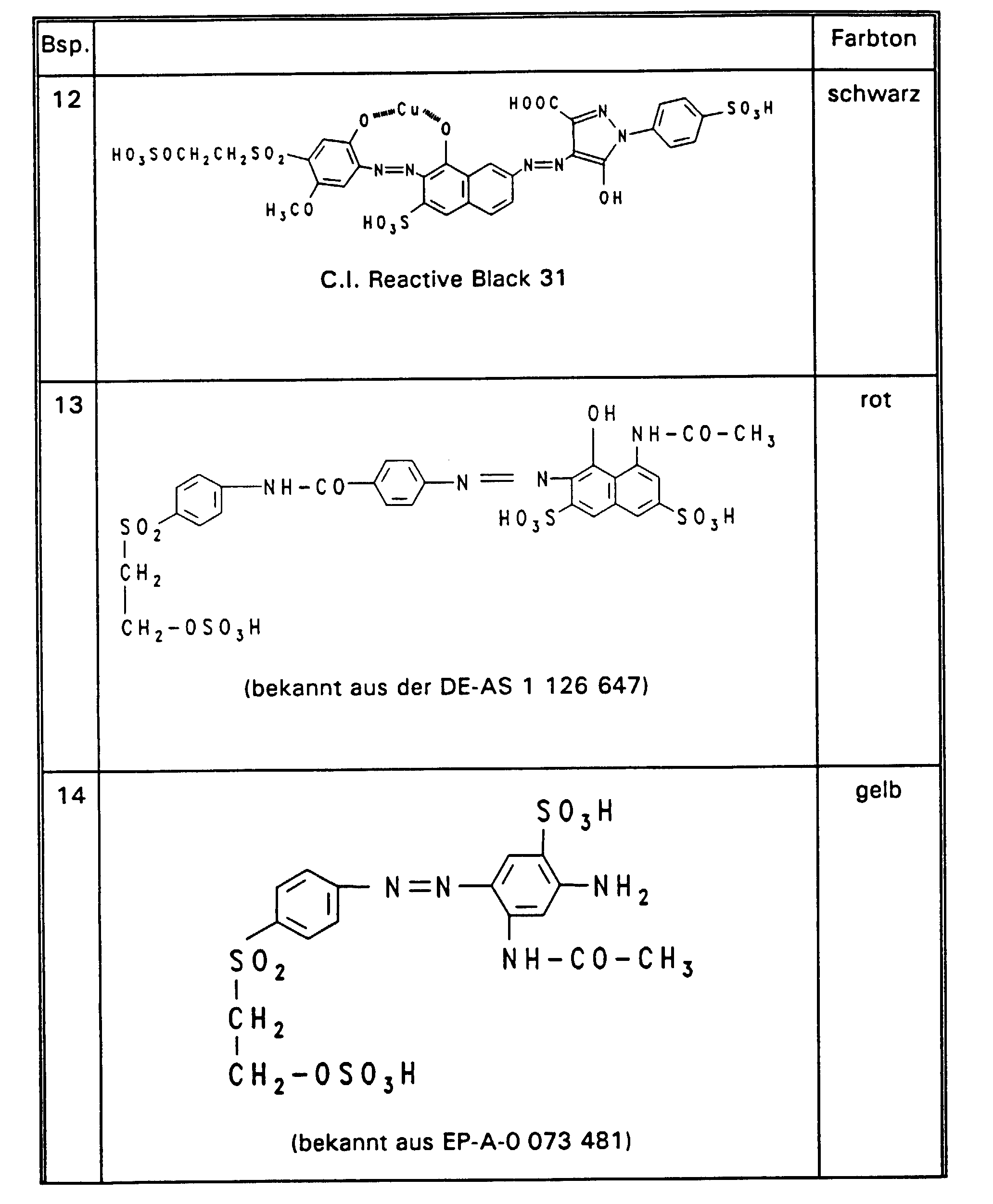

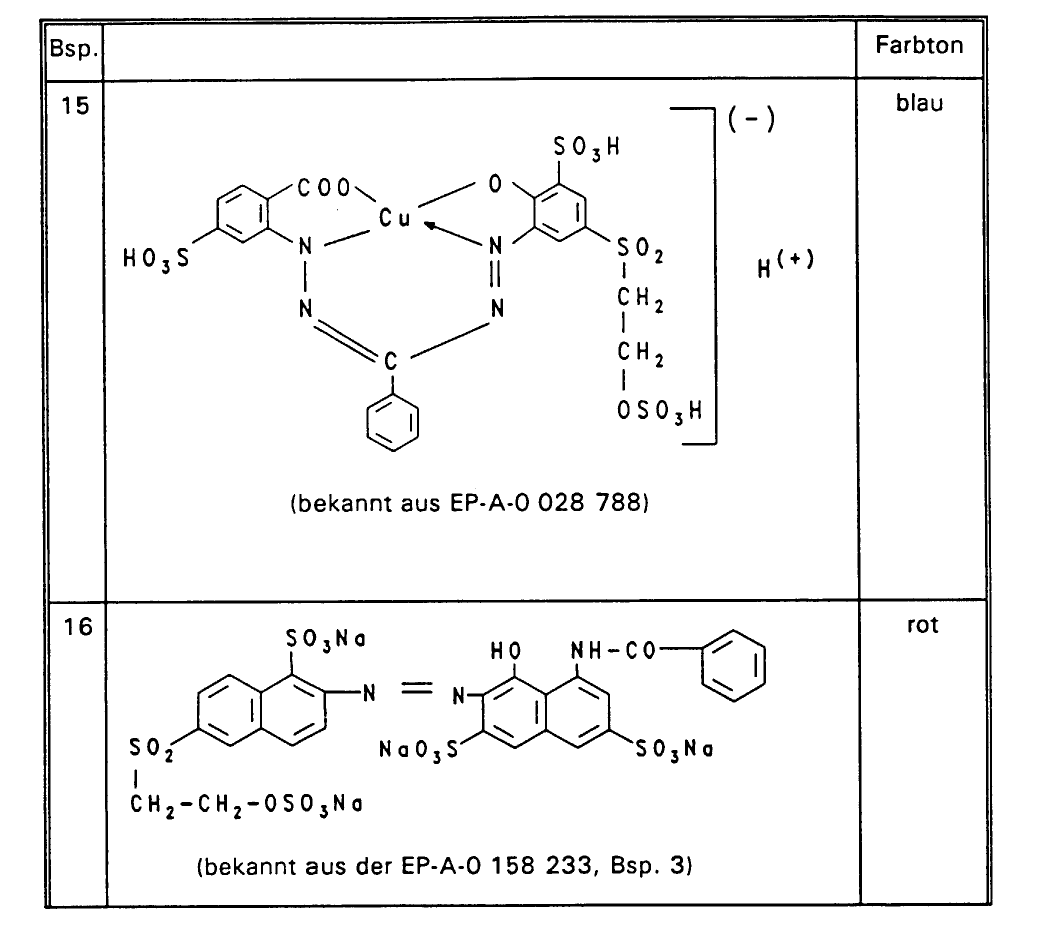

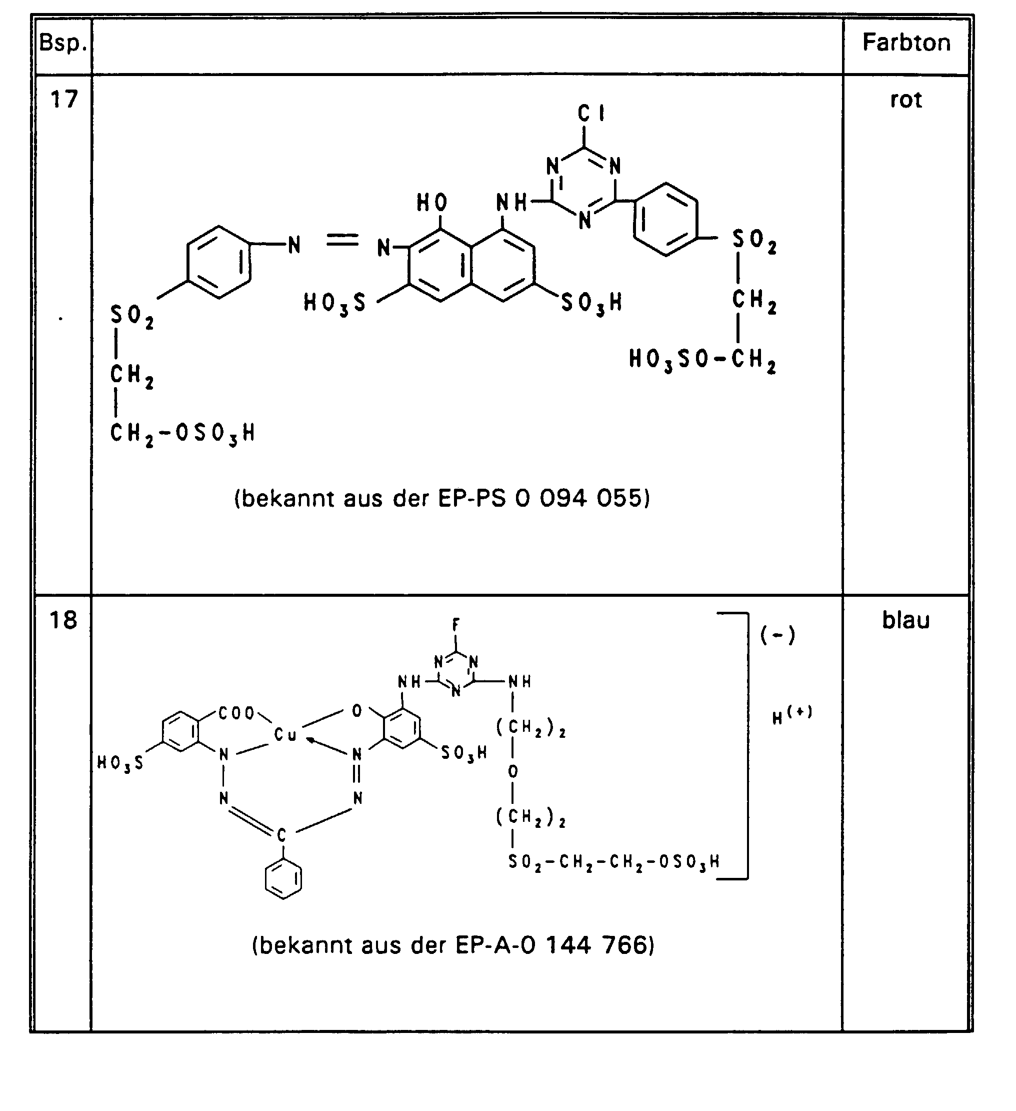

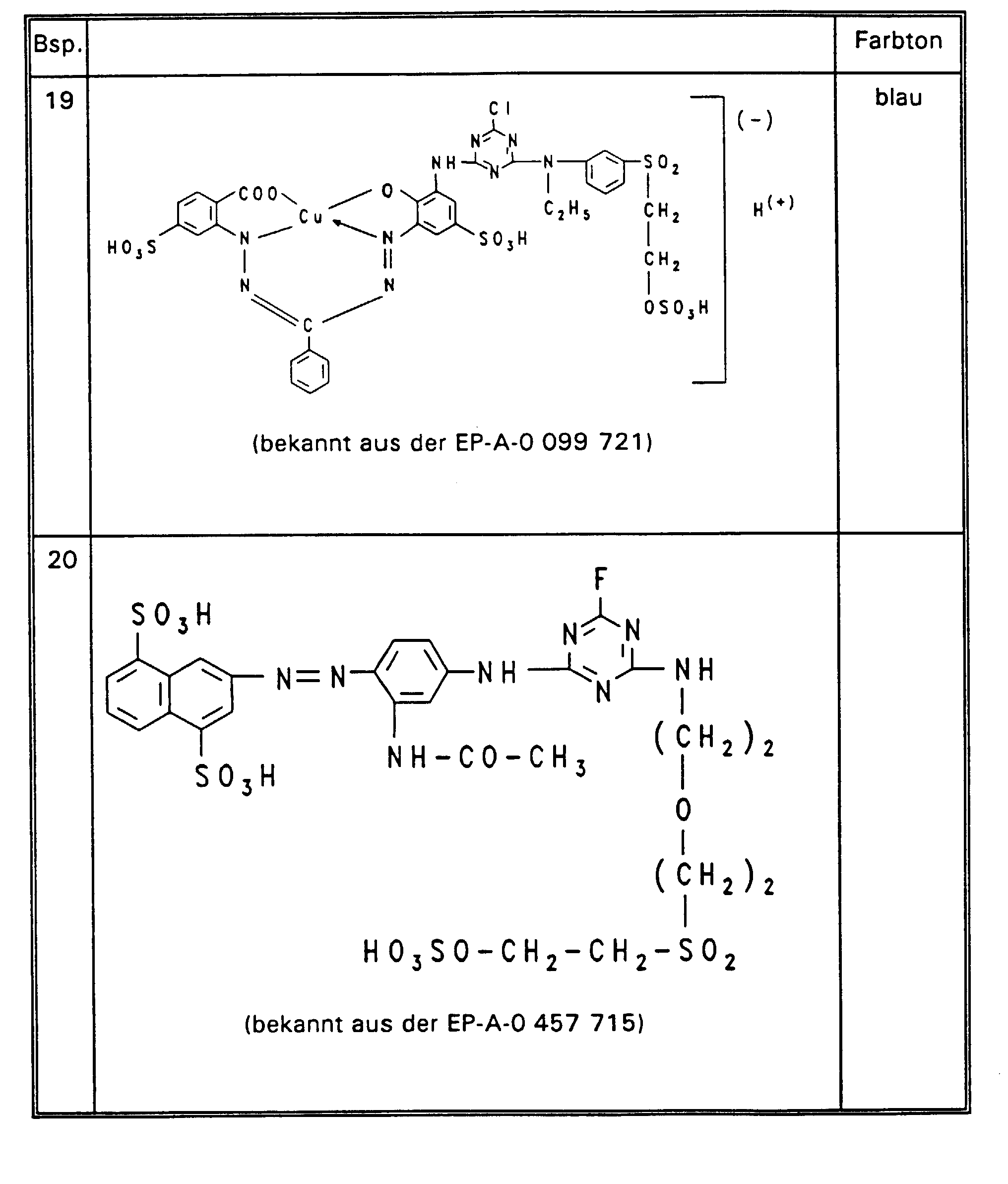

## Patentansprüche

1. Verfahren zur Herstellung von Viskose, dadurch gekennzeichnet, daß man ein mit Reaktivfarbstoffen gefärbtes Cellulosematerial in Alkalilauge suspendiert, die gebildete Alkalicellulose für mindestens 30 Minuten bei Temperaturen von 30 bis 80°C reifen läßt, sie sodann durch Umsetzung mit Schwefelkohlenstoff zum Xanthogenat bei einer Temperatur von 10 bis 30°C in Lösung bringt und die xanthogenierte Alkalicellulose zu Fasern verspinnt oder zu Folien verarbeitet.

2. Verfahren nach Anspruch 1, dadurch gekennzeichnet, daß das mit Reaktivfarbstoff gefärbte Cellulosematerial mit Zellstoff vermischt ist.

3. Verfahren nach Anspruch 1 oder 2, dadurch gekennzeichnet, daß man nach der Bildung der Alkalicellulose eine reduzierende Schwefelverbindung bei einer Temperatur von 20 bis 80°C auf die Alkalicellulose einwirken läßt.

4. Verfahren nach mindestens einem der Ansprüche 1 bis 3, dadurch gekennzeichnet, daß das Cellulosematerial Alttextilien aus Cellulosefasern sind.

5. Verfahren nach mindestens einem der Ansprüche 1 bis 3, dadurch gekennzeichnet, daß das Cellulosematerial Alttextilien aus Baumwolle sind.

6. Verfahren nach mindestens einem der Ansprüche 1 bis 3, dadurch gekennzeichnet, daß das Cellulosematerial Alttextilien aus aminierten Viskose- oder Baumwollfasern sind.

7. Verfahren nach mindestens einem der Ansprüche 1 bis 6, dadurch gekennzeichnet, daß mechanisch zerkleinertes Cellulosematerial eingesetzt wird.

8. Verfahren nach mindestens einem der Ansprüche 1 bis 7, dadurch gekennzeichnet, daß einfarbiges und nach Farben getrenntes Cellulosematerial eingesetzt wird.

9. Verfahren nach mindestens einem der Ansprüche 1 bis 8, dadurch gekennzeichnet, daß man ein mit einem Reaktivfarbstoff vom Vinylsulfon-Typ gefärbtes Cellulosematerial in Alkalilauge suspendiert und eine reduzierende Schwefelverbindung bei einer Temperatur von 20 bis 80°C darauf einwirken läßt.

10. Verfahren nach Anspruch 9, dadurch gekennzeichnet, daß der Reaktivfarbstoff einen Vinylsulfonyl-, β-Chlorethylsulfonyl-, β-Sulfatoethylsulfonyl-, β-Acetoxy-ethylsulfonyl-, β-Phosphatoethylsulfonyl- oder β-Thiosulfatoethylsulfonyl-Rest hat.

11. Verfahren nach Anspruch 9 oder 10, dadurch gekennzeichnet, daß die reduzierende Schwefelverbindung ein Alkalihydrogensulfit oder ein Alkalidithionit ist.

12. Verfahren nach Anspruch 11, dadurch gekennzeichnet, daß die reduzierende Schwefelverbindung in einer Menge von 5 bis 30 Gew.-%, bezogen auf das eingesetzte Cellulosematerial, eingesetzt wird.

13. Verfahren nach mindestens einem der Ansprüche 1 bis 12, dadurch gekennzeichnet, daß man die Alkalicellulose für 1/2 bis 24 Stunden reifen läßt.

14. Verfahren nach mindestens einem der Ansprüche 1 bis 13, dadurch gekennzeichnet, daß man die Alkalicellulose in Gegenwart von Cellulose abbauenden Enzymen reifen läßt.

## Claims

1. A process for making viscose, which comprises suspending a reactive-dyed cellulose material in an alkali metal hydroxide solution, allowing the alkali cellulose formed to ripen at temperatures from 30 to 80°C for at least 30 minutes, then dissolving it at a temperature from 10 to 30°C by conversion with carbon disulfide into the xanthate, and processing the xanthated alkali cellulose into fiber or film/sheet.

2. The process of claim 1, wherein the reactive-dyed cellulose material has been mixed with pulp.

3. The process of claim 1 or 2, wherein, after the formation of the alkali cellulose, the alkali cellulose is subjected to the action of a reducing sulfur compound at a temperature from 20 to 80°C.

4. The process of at least one of claims 1 to 3, wherein the cellulose material comprises waste textiles composed of cellulose fibers.

5. The process of at least one of claims 1 to 3, wherein the cellulose material comprises waste textiles composed of cotton.

6. The process of at least one of claims 1 to 3, wherein the cellulose material comprises waste textiles composed of aminated viscose or cotton fibers.

7. The process of at least one of claims 1 to 6, wherein mechanically comminuted cellulose material is used.

8. The process of at least one of claims 1 to 7, wherein single-colored and color-sorted cellulose material is used.

9. The process of at least one of claims 1 to 8, wherein a cellulose material which has been dyed with a reactive dye of the vinyl sulfone type is suspended in alkali metal hydroxide solution and subjected to the action of a reducing sulfur compound at a temperature from 20 to 80°C.

10. The process of claim 9, wherein the reactive dye has a vinylsulfonyl, β-chloroethylsulfonyl, β-sulfatoethylsulfonyl, β-acetoxyethylsulfonyl, β-phosphatoethylsulfonyl or β-thiosulfatoethylsulfonyl radical.

11. The process of claim 9 or 10, wherein the reducing sulfur compound is an alkali metal bisulfite or an alkali metal dithionite.

12. The process of claim 11, wherein the reducing sulfur compound is used in an amount from 5 to 30% by weight, based on the cellulose material used.

13. The process of at least one of claims 1 to 12, wherein the alkali cellulose is allowed to ripen for 1/2 to 24 hours.

14. The process of at least one of claims 1 to 13, wherein the alkali cellulose is allowed to ripen in the presence of a cellulose-degrading enzyme.

## Revendications

1. Procédé pour la fabrication de viscose, caractérisé en ce que l'on suspend un matériau cellulosique coloré au moyen de colorants réactifs dans une lessive alcaline, on laisse mûrir la cellulose alcaline ainsi formée pendant au moins 30 minutes à des températures de 30 à 80°C, on la met ensuite en solution par conversion avec du sulfure de carbone en xanthogénate à une température de 10 à 30°C, et on file la cellulose alcaline convertie en ester xanthogénique ou on la transforme en feuilles.

2. Procédé selon la revendication 1, caractérisé en ce que le matériau cellulosique coloré au moyen de colorant réactif est mélangé avec de la pâte de cellulose.

3. Procédé selon la revendication 1 ou 2, caractérisé en ce qu'après la formation de la cellulose alcaline, on fait agir sur la cellulose alcaline un composé soufré réducteur à une température de 20 à 80°C.

4. Procédé selon au moins l'une des revendications 1 à 3, caractérisé en ce que le matériau cellulosique est constitué de vieux tissus en fibres de cellulose.

5. Procédé selon au moins l'une des revendications 1 à 3, caractérisé en ce que le matériau cellulosique est constitué de vieux tissus en coton.

6. Procédé selon au moins l'une des revendications 1 à 3, caractérisé en ce que le matériau cellulosique est constitué de vieux tissus de fibres de viscose ou de coton aminées.

7. Procédé selon au moins l'une des revendications 1 à 6, caractérisé en ce que l'on utilise un matériau cellulosique déchiqueté mécaniquement.

8. Procédé selon au moins l'une des revendications 1 à 7, caractérisé en ce que l'on utilise un matériau cellulosique d'une seule couleur ou trié selon la couleur.

9. Procédé selon au moins l'une des revendications 1 à 8, caractérisé en ce que l'on suspend le matériau cellulosique coloré au moyen d'un colorant réactif du type vinylsulfone dans une lessive alcaline, et on fait ensuite agir un composé soufré réducteur à une température de 20 à 80°C.

10. Procédé selon la revendication 9, caractérisé en ce que le colorant réactif comporte un radical vinylsulfonyle, β-chloréthylsulfonyle, β-sulfatoéthylsulfonyle, β-acétoxyéthylsulfonyle, β-phosphatoéthylsulfonyle ou β-thiosulfatoéthylsulfonyle.

11. Procédé selon la revendication 9 ou 10, caractérisé en ce que le composé soufré réducteur est un hydrogénosulfite alcalin ou un dithionite alcalin.

12. Procédé selon la revendication 11, caractérisé en ce que le composé soufré réducteur est utilisé en une quantité de 5 à 30 % en poids, par rapport au matériau cellulosique mis en oeuvre.

13. Procédé selon au moins l'une des revendications 1 à 12, caractérisé en ce que l'on laisse mûrir la cellulose alcaline pendant ½ à 24 heures.

14. Procédé selon au moins l'une des revendications 1 à 13, caractérisé en ce que l'on laisse mûrir la cellulose alcaline en présence d'enzymes décomposant la cellulose.
